# EUROPEAN PATENT APPLICATION

(11) **EP 4 826 389 A1**
(43) Date of publication of application: **21.10.2026**
(21) Application number: 24903179.0
(22) Date of filing: 11.06.2024
(51) Int. Cl.: G01N 35/10, G01N 21/17, G01N 21/31, G01N 35/00

(54) **LIQUID COLLECTION AND INJECTION DEVICE**

(30) Priority: 11.12.2023 JP 2023208643
(71) Applicant: SHIMADZU CORPORATION, Kyoto-shi, Kyoto 604-8511 (JP)
(72) Inventor: UZAWA, Shihomi, Kyoto-shi, Kyoto 604-8511 (JP); SHIOMI, Mao, Kyoto-shi, Kyoto 604-8511 (JP); TAKAMI, Yoshio, Kyoto-shi, Kyoto 604-8511 (JP); KOBAYASHI, Osuke, Kyoto-shi, Kyoto 604-8511 (JP)
(74) Representative: Müller-Boré & Partner Patentanwälte PartG mbB
(86) International application number: PCT/JP2024/021229
(87) International publication number: WO 2025/126515

(57) **Abstract**

A liquid sampling and injecting apparatus for sampling a liquid and injecting the liquid into a predetermined place, comprising a tubular tip (153) that aspirates and discharges a liquid with a distal end facing downward, a moving mechanism (160, 181, 182) that moves the tip in a three-dimensional space, an imaging unit (155) that captures an image of the distal end of the tip, a photoelectric sensor (170) having a light emitting unit (171) and a light receiving unit (172), and a position specifying unit (123) that specifies a position of the distal end of the tip in the three-dimensional space based on the image of the distal end of the tip captured by the imaging unit and detection information obtained by detecting the distal end of the tip with the photoelectric sensor.

## Description

### Technical Field

The present invention relates to a liquid sampling and injecting apparatus.

### Background Art

Atomic absorption spectrophotometers are used to quantify elements such as metals contained in liquids such as drinking water. In an atomic absorption spectrophotometer, a liquid sample is thermally decomposed to generate atomic vapor, and the atomic vapor is irradiated with light to obtain an absorption spectrum, thereby performing qualitative and quantitative analysis of the sample.

The atomic absorption spectrophotometer includes a measurement unit and an autosampler. The measurement unit includes a sample heating unit consisting of a graphite furnace, a light source that irradiates light to the atomic vapor generated by the sample heating unit, and a detector that detects the light passing through the atomic vapor, and the sample heating unit is provided with a sample injection port for injecting a liquid sample. The autosampler includes a sample mounting unit on which a plurality of sample containers storing liquid samples are set, a tubular tip for aspirating and discharging a liquid sample, an arm having the tip attached to a distal end thereof, and a moving mechanism that moves the arm in a vertical direction and a horizontal direction. At the time of analysis, the tip attached to the arm of the autosampler is inserted into the sample container to sample a liquid sample. Then, the arm is moved to insert the distal end of the tip into the sample injection port, and the liquid sample is injected into the sample heating unit.

In such an autosampler, as use is repeated, the tip deteriorates, causing an error in the injection amount of the sample, or the tip becomes clogged, leaving the previously measured liquid sample in the tip and causing contamination. In order to prevent these issues, an analyst needs to replace the tip at an appropriate time. In addition, since the sample heating unit also deteriorates with repeated use, the analyst needs to replace the sample heating unit at an appropriate time. At this time, since the analyst manually replaces the tip or the sample heating unit, an attachment error may occur, such as the tip being attached to the arm in an inclined state, or the attachment position of the sample heating unit being shifted. In the atomic absorption spectrophotometer, for example, the size of the sample injection port is about 1.5 mm to 2.0 mm in diameter, and the outer diameter of the tip is about 0.8 mm to 1.5 mm. Therefore, the error allowed in the radial direction of the tip (allowable error) is very small, and if the attachment error exceeds the allowable error, the tip will come into contact with the peripheral edge of the sample injection port. For this reason, conventionally, after replacing the tip, it has been necessary to perform a task called teaching, which adjusts the movement control of the arm so that the distal end of the tip is positioned directly above the center of the sample injection port. Patent Document 1 describes that an image acquired by a camera arranged at a position to simultaneously capture both the distal end of the tip and the sample injection port is displayed on a monitor, and teaching is performed while an analyst confirms the image. Further, Patent Document 2 describes that during teaching, the distal end position of the tip and the center position of the sample injection port are specified by analyzing an image acquired by a camera arranged at a position to simultaneously capture both the distal end of the tip and the sample injection port.

### Prior Art Documents

### Patent Documents

Patent Document 1: International Publication No. 2021/124513
Patent Document 2: International Publication No. 2023/188553

### Summary of Invention

### Problems to be Solved by the Invention

However, from an image captured by a single camera, the position of the distal end of the tip in the depth direction of the field of view of the camera may not be accurately specified in some cases. If a configuration is adopted in which the distal end of the tip is captured by a plurality of cameras and the distal end position of the tip is specified from the obtained plurality of images, high-precision position specification becomes possible, but in that case, there arises a problem that the manufacturing cost increases.

Note that such a problem is not limited to the autosampler of the atomic absorption spectrophotometer, but is common to liquid sampling and injecting apparatuses that sample a liquid with a tubular tip and inject it into a predetermined place.

The problem to be solved by the present invention is to realize accurate specification of a tip distal end position at a low cost in a liquid sampling and injecting apparatus that samples a liquid with a tubular tip and injects it into a predetermined place.

### Means for Solving the Problem

To solve the above problems, the present invention provides
a liquid sampling and injecting apparatus for sampling a liquid and injecting the liquid into a predetermined place, comprising:
a tubular tip that aspirates and discharges a liquid with a distal end facing downward;
a moving mechanism that moves the tip in a three-dimensional space;
an imaging unit that captures an image of the distal end of the tip;
a photoelectric sensor having a light emitting unit and a light receiving unit; and
a position specifying unit that specifies a position of the distal end of the tip in the three-dimensional space based on the image of the distal end of the tip captured by the imaging unit and detection information obtained by detecting the distal end of the tip with the photoelectric sensor.

### Advantageous Effects of Invention

According to the liquid sampling and injecting apparatus pertaining to the present invention having the above configuration, accurate specification of the tip distal end position can be realized at a low cost.

### Brief Description of Drawings

[Fig. 1] Fig. 1 is a schematic configuration diagram of an atomic absorption spectrophotometer according to a first embodiment of the present invention.
[Fig. 2] Fig. 2 is a side view of a tip moving mechanism in the embodiment.
[Fig. 3] Fig. 3 is a perspective view showing a distal end of an arm and a photoelectric sensor in the embodiment.
[Fig. 4] Fig. 4 is a schematic view showing a light receiving unit of the photoelectric sensor in the embodiment.
[Fig. 5] Fig. 5 is a flowchart showing a procedure when determining a center position of a sample injection port and a distal end position of a tip in the embodiment.
[Fig. 6] Fig. 6 is a schematic configuration diagram showing another configuration example of an analysis unit in the embodiment.
[Fig. 7] Fig. 7 is a schematic configuration diagram of an atomic absorption spectrophotometer according to a second embodiment of the present invention.
[Fig. 8] Fig. 8 is a side view of a tip moving mechanism in the embodiment.
[Fig. 9] Fig. 9 is a flowchart showing a procedure when determining a center position of a sample injection port and a distal end position of a tip in the embodiment.
[Fig. 10] Fig. 10 is a side view showing another example of the tip moving mechanism in the embodiment.
[Fig. 11] Fig. 11 is a graph showing the relationship between working distance and arm height at the time of detection.
[Fig. 12] Fig. 12 is an image showing a result of aligning the distal end of a tip with a sample injection port based only on an image captured by a camera.
[Fig. 13] Fig. 13 is an image showing a result of aligning the distal end of a tip with a sample injection port based on an image captured by a camera and a detection result of a photoelectric sensor.

### Description of Embodiments

Hereinafter, embodiments for carrying out the present invention will be described with reference to the drawings. Note that in the drawings described below, in order to show the configuration of main parts in an easy-to-understand manner, they are illustrated at scales different from actual ones, or illustration of some components is omitted.

### [First Embodiment]

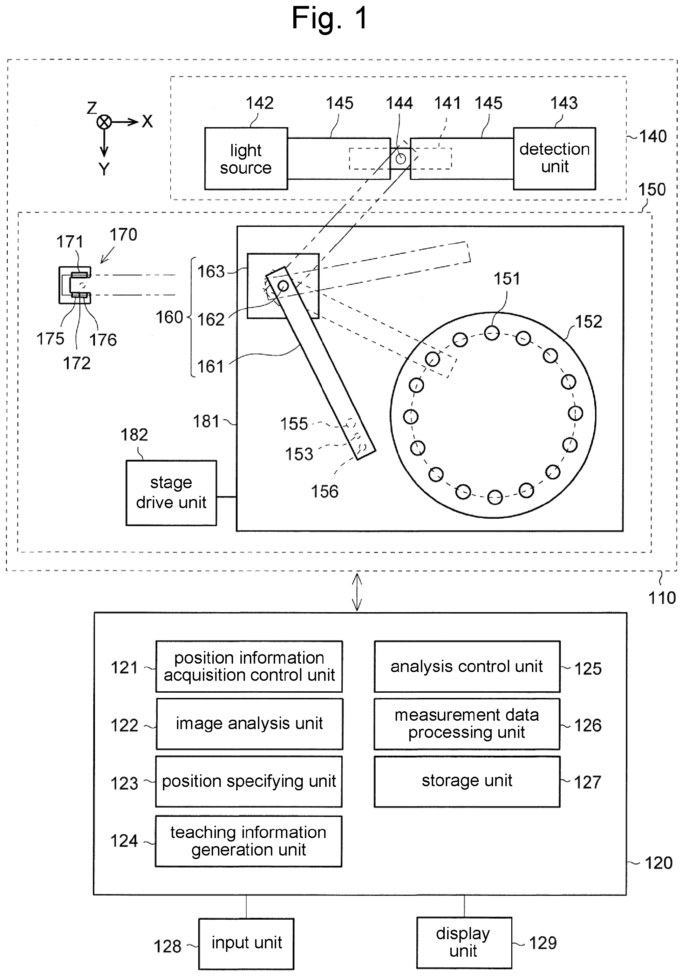

Fig. 1 is a schematic configuration diagram of an atomic absorption spectrophotometer according to a first embodiment of the present invention. This atomic absorption spectrophotometer is a flameless type (electrical heating type) atomic absorption spectrophotometer that atomizes a sample without using a flame, and includes an analysis unit 110 having a measurement unit 140 and an autosampler 150, and a control/processing unit 120 that controls operations of the analysis unit 110 and processes data acquired by the analysis unit 110. In Fig. 1, the analysis unit 110 is illustrated in a state viewed from above.

The measurement unit 140 includes a sample heating unit 141 (corresponding to a heating furnace in the present invention), a light source 142 that irradiates light to atomic vapor generated by the sample heating unit 141, and a detection unit 143 that spectrally disperses and detects the light passing through the atomic vapor. The sample heating unit 141 is an electric heating furnace having a cylindrical shape open at both ends, and a sample injection port 144, which is a circular hole for injecting a sample, is bored in a peripheral surface near a longitudinal center thereof. Note that the sample heating unit 141 is attached to the measurement unit 140 with its axis being substantially horizontal, with one end directed toward the light source 142, the other end directed toward the detection unit 143, and the sample injection port 144 directed upward. The size of the sample heating unit 141 in this embodiment is, for example, 3 to 7 mm in diameter and 1.5 cm to 3 cm in length, but is not limited to this. The dimension of the sample injection port 144 is small so as not to diffuse the atomic vapor generated in the sample heating unit 141, and its diameter is, for example, 1.5 mm to 2.0 mm. Of an optical path from the light source 142 to the detection unit 143, a portion excluding the vicinity of the sample injection port 144 is covered with a light shielding and heat insulating member 145 for light shielding and heat insulation.

The autosampler 150 includes a turntable 152 on which a plurality of sample containers 151 storing liquid samples are set, a tip moving mechanism 160 for moving a tip 153 for aspirating and discharging a liquid sample along a predetermined turning trajectory or moving it in a vertical direction (Z-axis direction in Fig. 1), a photoelectric sensor 170, a stage 181 on which the turntable 152 and the tip moving mechanism 160 are mounted, and a stage drive unit 182 that moves the stage 181 in two axial directions orthogonal to each other in a horizontal plane (X-axis direction and Y-axis direction in Fig. 1). Note that the tip moving mechanism 160, the stage 181, and the stage drive unit 182 correspond to a moving mechanism in the present invention.

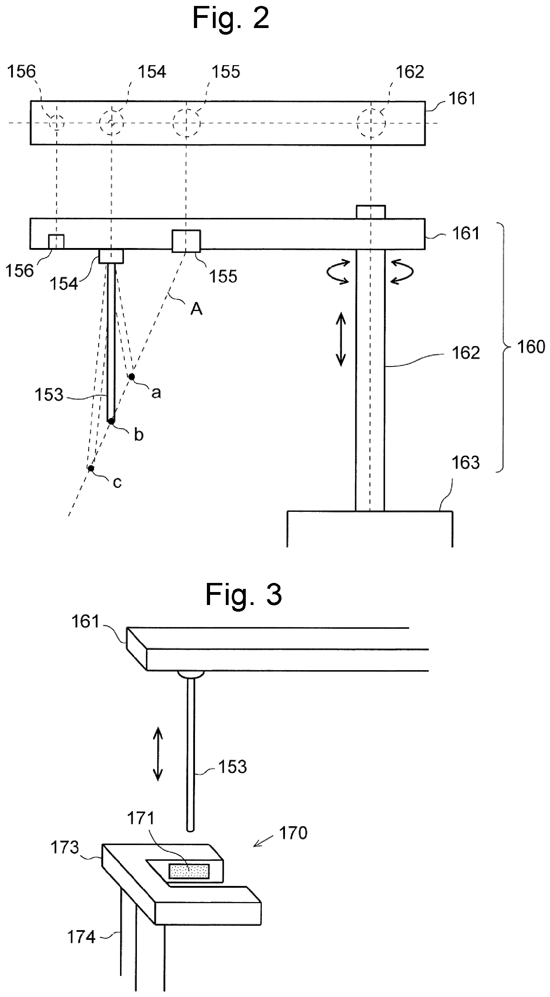

As shown in Fig. 2, the tip moving mechanism 160 includes an arm 161 extending in the horizontal direction, a shaft member 162 extending downward from one end (base end) of the arm 161, and an arm drive unit 163 that turns the arm 161 by rotating the shaft member 162 and moves the arm 161 in the vertical direction by moving the shaft member 162 up and down.

A tip attachment portion 154 is provided on a lower surface of the arm 161 near the distal end, and a tubular tip 153 is attached to the tip attachment portion 154 with its distal end facing downward. One end of a liquid feeding tube (not shown) is connected to a base end of the tip 153, and an aspiration/discharge mechanism such as a syringe (not shown) is connected to the other end of the liquid feeding tube. The outer diameter of the distal end portion of the tip 153 is smaller than the diameter of the sample injection port 144, for example, about 0.8 mm to 1.5 mm. In Fig. 2, the tip 153 is assumed to have a constant outer diameter over its entire length, but is not limited to this, and may have, for example, a tapered shape whose outer diameter gradually decreases toward the distal end.

As shown in Fig. 2, a single camera 155 (corresponding to an imaging unit in the present invention) is attached to the lower surface of the arm 161 on the base end side relative to the tip attachment portion 154. The camera 155 only needs to be attached so that the distal end of the tip 153 is included in its field of view, and may be attached to face directly downward as shown in Fig. 2, or may be attached in an inclined posture so that the distal end of the tip 153 comes near the center of the field of view. Furthermore, an illumination 156 is attached to the lower surface of the arm 161 on the distal end side relative to the tip attachment portion 154. The illumination 156 only needs to be attached in a direction capable of illuminating the distal end of the tip 153, and may be attached to face directly downward as shown in Fig. 2, or may be attached in an inclined posture so that the distal end of the tip 153 comes near the center of a region irradiated by the illumination 156. The illumination 156 may be composed of, for example, an LED, but is not limited to this.

The arm 161 can be moved to an initial position indicated by a solid line in Fig. 1, a sample collection position indicated by a broken line, and a photographing position indicated by a one-dot chain line, by the action of the tip moving mechanism 160. Further, the arm 161 can be moved to a detection position indicated by a two-dot chain line in Fig. 1 and a sample injection position indicated by a three-dot chain line, by the action of the tip moving mechanism 160 and the stage drive unit 182. When the arm 161 is at the sample collection position, the distal end of the tip 153 is inserted into a sample container 151 located at a predetermined position on the turntable 152, and when the arm 161 is at the detection position, the distal end of the tip 153 is inserted between a light emitting unit 171 and a light receiving unit 172 of the photoelectric sensor 170. Also, when the arm 161 is at the sample injection position, the distal end of the tip 153 is inserted into the sample injection port 144. When collecting a sample from the sample container 151, the tip moving mechanism 160 moves the arm 161 to the sample collection position, and then the sample is aspirated into the tip 153 by the above-described aspiration/discharge mechanism. When injecting the aspirated sample into the sample injection port 144, the tip moving mechanism 160 and the stage drive unit 182 move the arm 161 to the sample injection position, and then the sample is discharged into the sample heating unit 141 by the aspiration/discharge mechanism. Note that the above-described photographing position is a position where an image including the distal end of the tip 153 and excluding the sample injection port 144 can be photographed by the camera 155.

Furthermore, the arm 161 can be moved to an offset position (not shown), which is a position offset by a predetermined distance in a predetermined direction from the sample injection position, by the action of the tip moving mechanism 160 and the stage drive unit 182. The offset position is a position where the sample injection port 144 can be photographed by the camera 155 without overlapping with the tip 153, and may be a position where the arm 161 is moved upward by a predetermined distance from the sample injection position, or may be a position turned by a predetermined angle from the sample injection position. Hereinafter, the sample collection position, photographing position, detection position, sample injection position, and offset position described above may be collectively referred to as a target position.

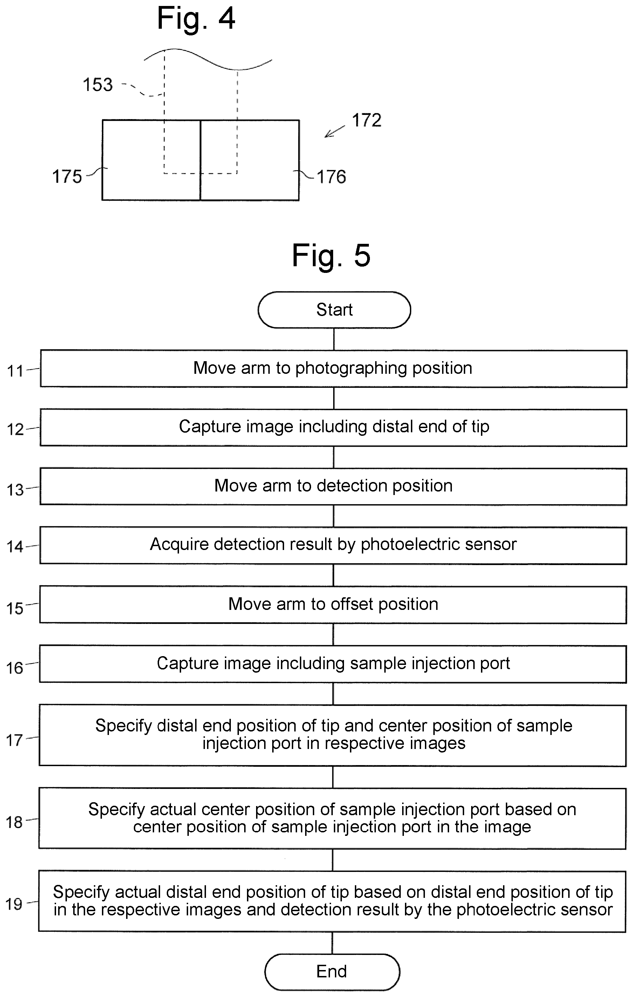

As shown in Fig. 1, the photoelectric sensor 170 is a so-called transmission type (groove type) photoelectric sensor having a light emitting unit 171 and a light receiving unit 172 which are disposed to face each other while being separated from each other. As shown in Fig. 3, the light emitting unit 171 and the light receiving unit 172 are housed in a U-shaped housing 173 (however, the light receiving unit 172 is not shown in the figure), and it is configured such that light emitted by the light emitting unit 171 strikes the light receiving unit 172. The photoelectric sensor 170 is fixed at a predetermined height position in the autosampler 150 by a support member 174. In Fig. 1, the photoelectric sensor 170 is disposed at a position away from the stage 181, but the photoelectric sensor 170 may be disposed on the stage 181. The light emitting unit 171 is composed of, for example, an LED element, and the light receiving unit 172 is composed of, for example, a photodiode, but they are not limited thereto. As shown in Fig. 4, a light receiving surface of the light receiving unit 172 of the photoelectric sensor 170 is divided into two regions. Hereinafter, one region of the bisected light receiving surface is referred to as a first region 175, and the other region is referred to as a second region 176. Further, as shown in Figs. 1 and 4, the photoelectric sensor 170 is arranged such that the light emitting unit 171 and the light receiving unit 172 are located in substantially the same horizontal plane, and the first region 175 and the second region 176 of the light receiving unit 172 are aligned in the lateral direction (horizontal direction).

The control/processing unit 120 includes, as functional blocks, a position information acquisition control unit 121, an image analysis unit 122, a position specifying unit 123, a teaching information generation unit 124, an analysis control unit 125, and a measurement data processing unit 126. The control/processing unit 120 further includes a storage unit 127. The functions of the control/processing unit 120 are realized by a computer provided with a CPU, a memory, a mass storage medium (such as a hard disk), and the like. The computer may be a dedicated computer for an atomic absorption spectrophotometer, but typically, a general-purpose computer such as a personal computer is used. A predetermined program is installed in the computer in advance, and by the CPU executing this program, the functions of the above-described functional blocks are embodied as software. Further, the function of the storage unit 127 is realized by the mass storage medium. An input unit 128 for a user (analyst) to input various instructions and a display unit 129 for displaying various information are connected to the computer. The display unit 129 is composed of, for example, a liquid crystal display, and the input unit 128 is composed of, for example, a keyboard, a pointing device such as a mouse, or a touch panel attached to the display unit 129.

The storage unit 127 stores various measurement conditions used during sample measurement by the atomic absorption spectrophotometer according to the present embodiment (for example, information associating an element to be measured with the type of light source to be used during the measurement of the element and the wavelength of light to be detected by the detection unit 143). Further, the storage unit 127 stores, as information necessary for moving the arm 161 to each of the above-described target positions (drive information), the coordinates of the initial position and each target position in an absolute coordinate system (world coordinate system) representing the three-dimensional space of the analysis unit 110, or a drive amount of the arm drive unit 163 or the stage drive unit 182 necessary to move the arm 161 from the initial position to each target position (or from one target position to another target position).

The analysis control unit 125 reads the measurement conditions stored in the storage unit 127 in response to an input operation by the analyst, and controls the operations of each part constituting the measurement unit 140 and the autosampler 150 to execute the measurement of the sample. The measurement data processing unit 126 analyzes the measurement data by subjecting the measurement data of the sample acquired by the measurement unit 140 to appropriate processing. Since the analysis control unit 125 and the measurement data processing unit 126 are similar to those provided in a conventional atomic absorption spectrophotometer, detailed description thereof is omitted.

As described above, in the atomic absorption spectrophotometer, as the use is repeated, the tip 153 deteriorates, causing an error in the injection amount of the sample, or the tip 153 becomes clogged, leaving the previously measured liquid sample in the tip 153 and causing contamination. In order to prevent these issues, an analyst needs to replace the tip 153 at an appropriate time. In addition, since the sample heating unit 141 also deteriorates with repeated use, the analyst needs to replace the sample heating unit 141 at an appropriate time. At this time, since the analyst manually replaces the tip 153 and/or the sample heating unit 141, an attachment error may occur, such as the tip 153 being attached to the arm 161 in an inclined state, or the attachment position of the sample heating unit 141 being shifted.

Therefore, in the atomic absorption spectrophotometer according to the present embodiment, after the analyst replaces the tip 153 and/or the sample heating unit 141, the distal end position of the tip 153 and the center position of the sample injection port 144 are specified by the following procedure. Note that the position information acquisition control unit 121 provided in the control/processing unit 120 controls the arm drive unit 163, the stage drive unit 182, the camera 155, and the illumination 156 in such confirmation work of the distal end position of the tip 153 and the center position of the sample injection port 144. The image analysis unit 122 performs predetermined processing on an image captured by the camera 155, and analyzes the processed image to specify the distal end position of the tip 153 and the center position of the sample injection port 144 in the image. The position specifying unit 123 specifies the actual distal end position of the tip 153 and the actual center position of the sample injection port 144 based on the analysis result by the image analysis unit 122 and the output from the photoelectric sensor 170. Furthermore, the teaching information generation unit 124 generates teaching information described later based on the actual distal end position of the tip 153 and the actual center position of the sample injection port 144 specified by the position specifying unit 123.

Fig. 5 is a flowchart showing a procedure when specifying the distal end position of the tip 153 and the center position of the sample injection port 144 in the atomic absorption spectrophotometer according to the present embodiment.

First, when an analyst operates the input unit 128 to instruct the specification of the distal end position of the tip 153 and the center position of the sample injection port 144, under the control of the position information acquisition control unit 121, the arm drive unit 163 moves the arm 161 from a predetermined position (for example, the above-described initial position) to the above-described photographing position (step 11). As described above, the photographing position is a position where the sample injection port 144 does not enter the field of view of the camera 155. Subsequently, the position information acquisition control unit 121 turns on the illumination 156 to illuminate the vicinity of the distal end of the tip 153 while causing the camera 155 to capture an image of the distal end of the tip 153 (step 12), and stores the obtained image in the storage unit 127.

Subsequently, the position information acquisition control unit 121 moves the arm 161 from the photographing position to the above-described detection position by the arm drive unit 163 and the stage drive unit 182, thereby inserting the distal end of the tip 153 between the light emitting unit 171 and the light receiving unit 172 of the photoelectric sensor 170 (step 13). Thereby, the light emitted by the light emitting unit 171 is partially blocked by the distal end of the tip 153 and enters the light receiving unit 172. The control/processing unit 120 acquires an output of the photoelectric sensor 170 at this time, that is, an output signal indicating a difference or a ratio between the amount of light received in the first region 175 and the amount of light received in the second region 176 of the light receiving unit 172, as a detection result by the photoelectric sensor 170 (step 14), and stores it in the storage unit 127.

Next, under the control of the position information acquisition control unit 121, the arm drive unit 163 and the stage drive unit 182 move the arm 161 to the offset position described above (step 15). As described above, the offset position is a position where the sample injection port 144 can be photographed without overlapping with the tip 153. Subsequently, the position information acquisition control unit 121 turns on the illumination 156 to illuminate the peripheral portion of the sample injection port 144 while causing the camera 155 to capture an image of the sample injection port 144 (step 16), and stores the obtained image in the storage unit 127.

Thereafter, the image analysis unit 122 reads the data of the respective images acquired in step 12 and step 16 from the storage unit 127, performs processing such as noise removal as necessary, and then determines the distal end position of the tip 153 in the image acquired in step 12 and the center position of the sample injection port 144 in the image acquired in step 16 (step 17). Specifically, for example, the contours of the tip 153 and the sample injection port 144 are extracted based on the luminance distribution or the like in the image, and the distal end position of the tip 153 and the center position of the sample injection port 144 are determined based on the extracted contour lines. At that time, for example, the center position of an ellipse defined by the contour line of the sample injection port 144 can be determined as the center position of the sample injection port 144. When determining the distal end position of the tip 153, for example, a center line of the tip 153 is drawn in the middle of two lines extending vertically among the contour lines of the tip 153, and the intersection between a portion connecting lower ends of the two lines among the contour lines (that is, the contour line of the distal end portion of the tip 153) and the center line can be determined as the distal end position of the tip.

Subsequently, the position specifying unit 123 specifies the actual center position of the sample injection port 144 based on the center position of the sample injection port 144 in the image specified in step 17 (step 18). Note that information on the correspondence relationship between the center position of the sample injection port 144 in the image acquired at the offset position and the actual center position of the sample injection port 144 is obtained in advance and stored in the storage unit 127. Here, the actual center position of the sample injection port 144 can be represented, for example, as coordinates of the center of the sample injection port 144 in an absolute coordinate system (world coordinate system) representing the three-dimensional space of the analysis unit 110.

Subsequently, the position specifying unit 123 specifies the actual distal end position of the tip 153 based on the distal end position of the tip 153 in the image specified in step 17 and the detection result by the photoelectric sensor 170 acquired in step 14 (step 19). Here, the actual distal end position of the tip 153 can be represented as, for example, a relative position of the distal end of the tip 153 with respect to the arm 161, and the relative position can be represented as, for example, coordinates of the distal end of the tip 153 in a three-dimensional coordinate system (local coordinate system) having its origin at a reference point on the arm 161 (for example, the center of the tip attachment portion 154).

For example, if information on the correspondence relationship between the distal end position of the tip 153 in the image captured at the photographing position and the actual distal end position of the tip 153 is stored in advance in the storage unit 127, the actual distal end position of the tip 153 can be estimated based on the distal end position of the tip 153 in the image specified in step 17 and the information on the correspondence relationship. However, as described above, in the image captured by the camera 155, the distal end position of the tip 153 in the depth direction of the field of view cannot be accurately specified. For example, as in the example shown in Fig. 2, in a case where the distal end of the tip 153 is positioned at any of point a, point b, or point c on an axis A extending from the distal end of the lens of the camera 155, the distal end of the tip 153 will be located at the same pixel in the image in any case. Therefore, from the image alone, it cannot be specified where the distal end of the tip 153 is located on the axis A. Therefore, in the atomic absorption spectrophotometer according to the present embodiment, the position of the distal end of the tip 153 is specified based on the detection result by the photoelectric sensor 170 acquired in step 14 in addition to the image captured by the camera 155. As described above, the detection result by the photoelectric sensor 170 (that is, the output signal of the photoelectric sensor acquired in step 14) reflects the difference or ratio between the amount of incident light on the first region 175 and the amount of incident light on the second region 176 of the light receiving unit 172. For example, as shown in Fig. 4, in a state where the center of the tip 153 and the boundary line between the first region 175 and the second region 176 overlap in a front view, the amount of light incident on the first region 175 and the amount of light incident on the second region 176 become equal. On the other hand, when the center of the tip 153 deviates from the boundary line toward the second region 176 side, the amount of light incident on the first region 175 becomes relatively larger than the amount of light incident on the second region 176, and conversely, when the center of the tip 153 deviates from the boundary line toward the first region 175 side, the amount of light incident on the first region 175 becomes relatively smaller than the amount of light incident on the second region 176. Therefore, by storing the relationship between the difference or ratio of the light receiving amounts and the relative position in the horizontal direction (the arrangement direction of the first region 175 and the second region 176) between the boundary line of the first region 175 and the second region 176 and the central axis of the tip 153 in the storage unit 127 in advance, the position of the tip 153 in the horizontal direction can be specified from the output signal of the photoelectric sensor 170 acquired in step 14. In the example of Fig. 2 described above, if the distal end position of the tip 153 in the horizontal direction (left-right direction in the drawing) can be specified, it can be specified at which position on the axis A the distal end of the tip 153 is located. As described above, in the atomic absorption spectrophotometer according to the present embodiment, when specifying the distal end position of the tip 153, the distal end position of the tip 153 can be specified with high accuracy by using the detection result by the photoelectric sensor 170 in addition to the image acquired by the camera 155. Further, since the photoelectric sensor 170 is inexpensive compared to the camera 155, according to the present embodiment, the manufacturing cost can be reduced compared to a case where a plurality of cameras are provided in the analysis unit 110.

After the actual center position of the sample injection port 144 and the actual distal end position of the tip 153 are specified as described above, the teaching information generation unit 124 generates drive information (teaching information) taking into account an attachment error by correcting the above-described drive information stored in the storage unit 127 based on information on the actual center position of the sample injection port 144 obtained in step 18 and the actual distal end position of the tip 153 obtained in step 19. Specifically, for example, based on the information on the actual positions of the center of the sample injection port 144 and the distal end of the tip 153 obtained above, and information on the respective positions of the center of the sample injection port 144 and the distal end of the tip 153 assuming no attachment error as described above (this is called a reference position), the direction and magnitude of deviation between the reference position and the actual position are derived for each of the center position of the sample injection port 144 and the distal end position of the tip 153. Note that the information on the reference position is obtained in advance and stored in the storage unit 127. Then, the teaching information generation unit 124 generates teaching information by correcting the drive information stored in the storage unit 127 based on the information on the direction and magnitude of the deviation (positional deviation information), and stores it in the storage unit 127. Then, in subsequent sample measurement to be executed, the analysis control unit 125 controls the arm drive unit 163 and the stage drive unit 182 based on the teaching information. Thereby, when the sample collected by the tip 153 is introduced into the sample heating unit 141, the distal end of the tip 153 can be accurately inserted into the center of the sample injection port 144.

Note that, in the above embodiment, it was assumed that the first region 175 and the second region 176 are arranged side by side in the lateral direction (horizontal direction) on the light receiving surface of the photoelectric sensor 170, but the arrangement direction of the first region 175 and the second region 176 is not limited to this, and for example, the first region 175 and the second region 176 may be arranged side by side in the longitudinal direction (vertical direction) on the light receiving surface. In that case, assuming that there is no positional deviation at the distal end of the tip 153, the arm 161 is moved to a position where the distal end of the tip 153 comes to the boundary between the first region 175 and the second region 176, and based on the ratio or difference between the amount of light received by the first region 175 and the amount of light received by the second region 176 at that time, the position of the distal end of the tip 153 in the vertical direction (that is, the amount of deviation from the boundary) can be specified. In the example of Fig. 2, if the distal end position of the tip 153 in the vertical direction can be specified, the distal end position of the tip 153 on the axis A can also be specified, so even when using the photoelectric sensor 170 having such a configuration, it is possible to accurately specify the distal end position of the tip 153. Further, a sensor having a light receiving surface divided in two directions (for example, the horizontal direction and the vertical direction) may be used as the photoelectric sensor 170. In that case, since information on the distal end position of the tip 153 in the two directions can be obtained, the distal end position of the tip 153 can be more accurately specified.

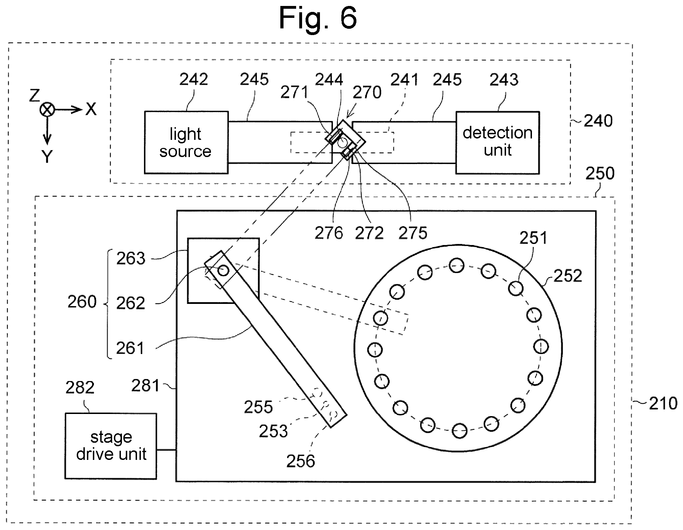

Further, in the above embodiment, the photoelectric sensor 170 is configured to be provided in the autosampler 150, but instead of this, as shown in Fig. 6, a photoelectric sensor 270 may be provided above a sample injection port 244 of a measurement unit 240. In this figure, the same or corresponding configurations as those shown in Fig. 1 are assigned reference numerals sharing the same last two digits. In this case, the photoelectric sensor 270 is arranged such that a first region 275 and a second region 276 of a light receiving unit 272 of the photoelectric sensor 270 are arranged along the extending direction of an arm 261 at the sample injection position (position indicated by a three-dot chain line in Fig. 6), and a boundary line between the first region 275 and the second region 276 coincides with the central axis of the sample injection port 244 when viewed from a direction perpendicular to the light receiving surface. Then, the arm 261 is moved so that the distal end of a tip 253 comes above the photoelectric sensor 270, and then the arm 261 is lowered so that the distal end of the tip 253 comes between a light emitting unit 271 and the light receiving unit 272 of the photoelectric sensor 270. Then, the position of the arm 261 is adjusted so that the distal end of the tip 253 is positioned directly above the sample injection port 244 on an image captured by a camera 255 attached to the arm 261, and a difference between an amount of light received by the first region 275 and an amount of light received by the second region 276 in the photoelectric sensor 270 becomes 0 (or a ratio of the amount of light received by the first region 275 to the amount of light received by the second region 276 becomes 1). Thereby, the distal end of the tip 253 can be accurately aligned on the central axis of the sample injection port 244.

### [Second Embodiment]

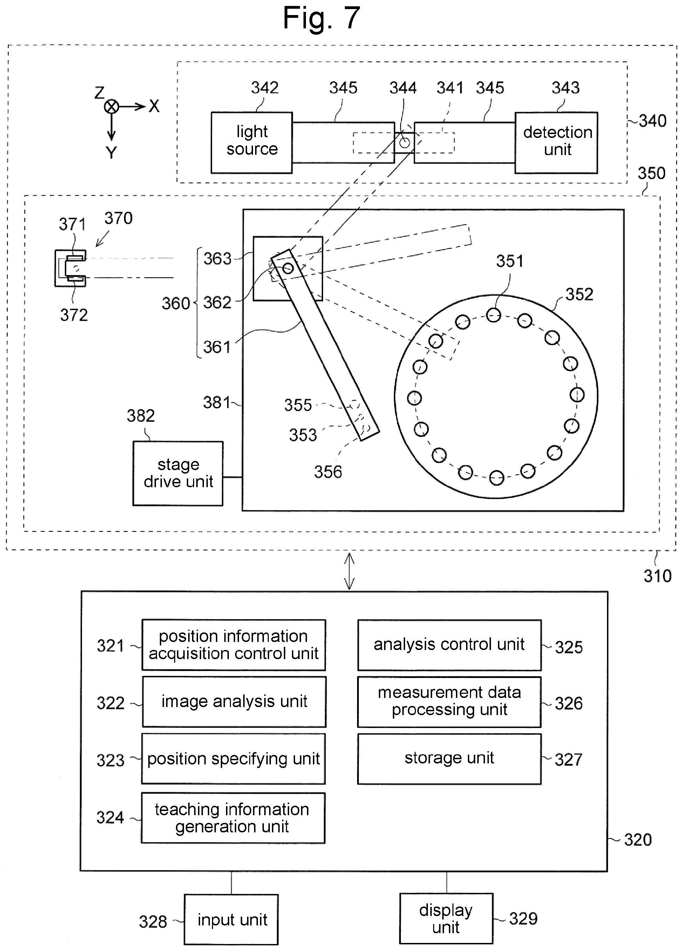

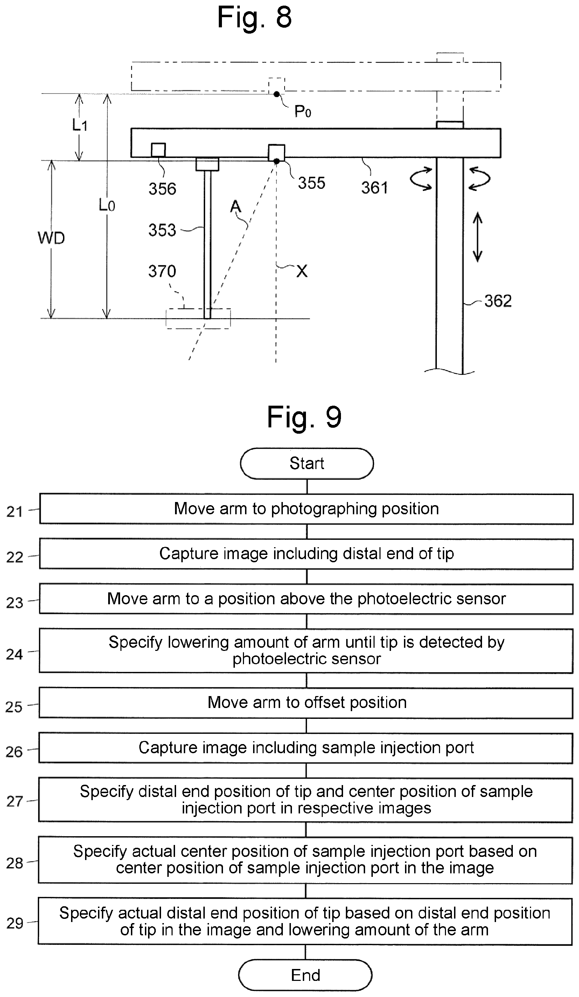

Next, the configuration of an atomic absorption spectrophotometer according to a second embodiment of the present invention will be described with reference to Figs. 7 to 8. In Figs. 7 and 8, the same or corresponding components as those shown in Figs. 1 and 2 are denoted by reference numerals sharing the same last two digits, and descriptions thereof are omitted as appropriate. Note that the atomic absorption spectrophotometer according to the present embodiment is the same as the atomic absorption spectrophotometer according to the above-described first embodiment, except for the structure of a photoelectric sensor 370 and the method for specifying the distal end position of a tip 353. Therefore, hereinafter, differences from the first embodiment will be mainly described, and description of other points will be omitted as appropriate.

In the atomic absorption spectrophotometer according to the present embodiment, as shown in Fig. 8, a camera 355 is attached to an arm 361 with its optical axis (central axis of a lens of the camera 355) X facing directly downward. The basic configuration of the photoelectric sensor 370 in this embodiment is almost the same as that shown in Fig. 3, but the light receiving surface of a light receiving unit 372 is not divided, and based on the amount of light received by the light receiving unit 372, it detects whether or not an object is present in front of the light receiving unit 372 (that is, between a light emitting unit 371 and the light receiving unit 372).

The procedure for specifying the distal end position of the tip 353 and the center position of a sample injection port 344 in this embodiment will be described with reference to the flowchart of Fig. 9. First, under the control of a position information acquisition control unit 321, an arm drive unit 363 moves the arm 361 to a photographing position same as that in the first embodiment (that is, the position indicated by a one-dot chain line in Fig. 7) (step 21). Thereafter, the position information acquisition control unit 321 turns on an illumination 356 and controls the camera 355 to capture an image including the distal end of the tip 353 (step 22). Note that the procedure at this time is the same as steps 11 and 12 in the flowchart of Fig. 5, so a detailed description will be omitted.

Subsequently, under the control of the position information acquisition control unit 321, the arm drive unit 363 and a stage drive unit 382 move the arm 361 to a predetermined position above the photoelectric sensor 370 (position indicated by a two-dot chain line in Figs. 7 and 8) (step 23). At this time, the distal end of the tip 353 is made to come above the photoelectric sensor 370 (the height of the lens distal end of the camera 355 at this time is referred to as "initial height P₀"). Thereafter, the arm 361 is gradually lowered by the arm drive unit 363, and the lowering amount L₁ of the arm 361 required until the distal end of the tip 353 is detected by the photoelectric sensor 370 is stored in a storage unit 327 (step 24).

Next, under the control of the position information acquisition control unit 321, the arm drive unit 363 and the stage drive unit 382 move the arm 361 to an offset position same as that in the first embodiment (that is, a position offset by a predetermined distance in a predetermined direction from a sample injection position indicated by a three-dot chain line in Fig. 7) (step 25). Subsequently, the position information acquisition control unit 321 turns on the illumination 356 and controls the camera 355 to capture an image including the sample injection port 344 (step 26). Note that the procedure at this time is the same as steps 15 and 16 in the flowchart of Fig. 5, so a detailed description will be omitted.

Thereafter, an image analysis unit 322 specifies the distal end position of the tip 353 in the image acquired in step 22 and the center position of the sample injection port 344 in the image acquired in step 26 (step 27). Then, a position specifying unit 323 specifies the actual center position of the sample injection port 344 based on the center position of the sample injection port 344 in the image specified by the image analysis unit 322 (step 28). Since the above steps 27 and 28 are the same as steps 17 and 18 in the flowchart of Fig. 5, a detailed description will be omitted.

Subsequently, the position specifying unit 323 specifies the actual distal end position of the tip 353 based on the distal end position of the tip 353 in the image specified in step 27 and the lowering amount L₁ of the arm 361 specified in step 24 (step 29). Specifically, a distance L₀ from the above-described initial height P₀ to an upper limit of a height detectable by the photoelectric sensor 370 is specified in advance and stored in the storage unit 327, and by subtracting the above-described lowering amount L₁ from the distance L₀, the distance from the distal end of the lens of the camera 355 to the distal end of the tip 353 in the direction of the optical axis X of the camera 355 is specified. Hereinafter, this distance is referred to as a working distance (WD). As described above, if the distal end position of the tip 353 in the image and the WD are known, the actual distal end position of the tip 353 can be uniquely determined.

Note that, instead of the distance L₀, information on a distance from the lens distal end of the camera 355 to the distal end of a predetermined tip 353 (hereinafter referred to as a reference tip) in a state where the reference tip is attached to the arm 361 without causing positional deviation as described above (the distance being hereinafter referred to as a reference WD), and information on the height of the arm 361 when the arm 361 to which the reference tip is attached is lowered from above the photoelectric sensor 370 and the distal end of the reference tip is detected by the photoelectric sensor 370 (hereinafter referred to as a reference arm height) may be stored in advance in the storage unit 327. In that case, in step 24, instead of the lowering amount, the height of the arm 361 when the distal end of the tip 353 to be positionally specified (hereinafter referred to as a target tip) is detected by the photoelectric sensor 370 is specified, and in step 29, the difference in WD between the reference tip and the target tip is specified from the difference between the reference arm height and the height of the arm 361 specified in step 24. Then, the WD for the target tip is specified based on the difference in WD and the reference WD. Note that the relationship between the difference in WD and the difference in height of the arm 361 when the distal end of the tip 353 is detected by the photoelectric sensor 370 is specified in advance and stored in the storage unit 327.

As described above, according to the atomic absorption spectrophotometer of the present embodiment, the actual distal end position of the tip 353 can be accurately obtained by utilizing information obtained by detecting the distal end of the tip 353 with the photoelectric sensor 370 (that is, the above-mentioned lowering amount L₁) in addition to the image acquired by the camera 355.

Thereafter, a teaching information generation unit 324 generates teaching information by correcting the drive information stored in the storage unit 327 based on the actual center position of the sample injection port 344 specified in step 28 and the actual distal end position of the tip 353 specified in step 29. Since this step is the same as that described in the first embodiment, a detailed description will be omitted.

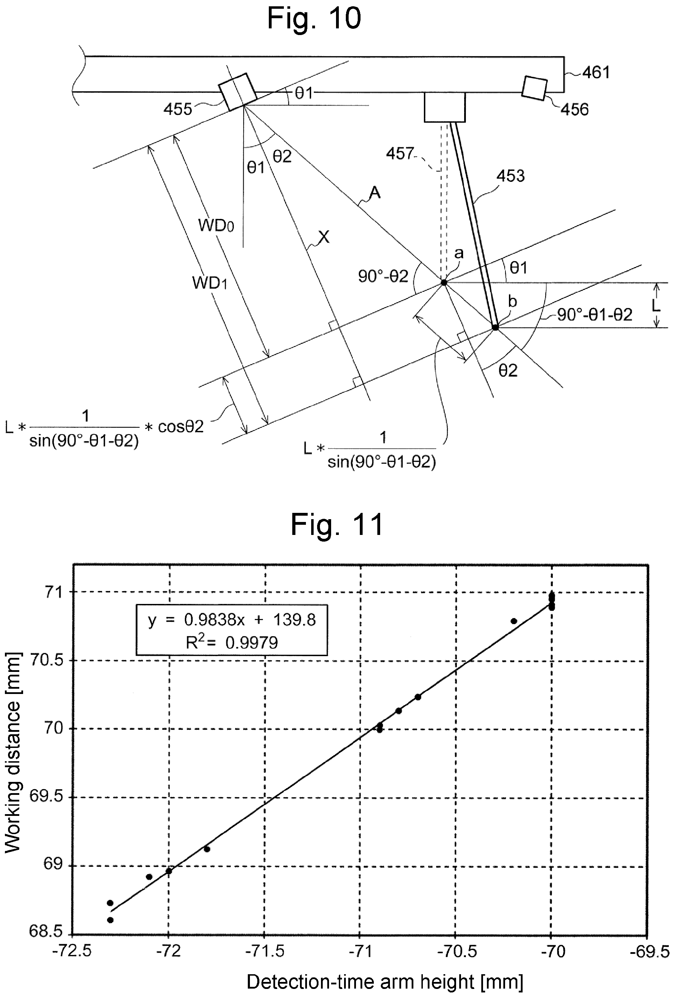

In the above-described second embodiment, as shown in Fig. 8, the camera 355 is attached to the arm 361 with its optical axis X facing directly downward, but instead of this, as shown in Fig. 10, a camera 455 may be attached to an arm 461 in a posture in which its optical axis X is inclined with respect to the vertical direction. In this figure, the same or corresponding components as those shown in Fig. 8 are assigned reference numerals sharing the same last two digits. When the camera 455 is inclined and arranged in this way, the working distance for the tip (target tip 453) to be position-specified can be obtained by using trigonometric functions. Specifically, for example, as shown in Fig. 10, if a working distance is WD₀ for a tip (reference tip 457) attached to the arm 461 without positional deviation as described above, a working distance is WD₁ for a target tip 453 to be position-specified, an angle formed by a plane orthogonal to the optical axis X of the camera 455 and a horizontal plane is θ1, an angle formed by the optical axis X and an axis A that is a line connecting the distal end of the lens of the camera 455 and the distal end of the tip 453 is θ2, and a difference in height of the arm 461 when the distal ends of the reference tip 457 and the target tip 453 are respectively detected by a photoelectric sensor (not shown) (that is, a difference in distal end position of the reference tip 457 and the target tip 453 in the height direction) is L, a difference in working distance between the reference tip 457 and the target tip 453 (that is, WD₁ - WD₀) can be expressed as L*(1/SIN(90°-*θ*1-*θ*2))*COS*θ*2. Note that the value of *θ*2 is specified from the distal end position of the tip 453 in the image specified in step 27 described above. Therefore, by storing the values of WD₀ and *θ*1, and the height of the arm 461 when the distal end of the reference tip 457 is detected by the photoelectric sensor in a storage unit (not shown) in advance, and by storing a correspondence relationship between the distal end position of the tip 453 in the image and the value of *θ*2 in the storage unit in advance, in step 29 described above, WD₁ (that is, the working distance for the target tip 453) can be calculated from these values and the value of the height of the arm 461 when the distal end of the target tip 453 is detected by the photoelectric sensor in step 24.

In the above-described first and second embodiments, the distal end position of the tip 153, 253, 353, 453 is specified using the image acquired at the photographing position, and the center position of the sample injection port 144, 244, 344 is specified based on the image acquired at the offset position, but instead of this, both the distal end position of the tip 153, 253, 353, 453 and the center position of the sample injection port 144, 244, 344 may be specified based on the image acquired at the offset position. Further, in the first and second embodiments, the camera 155, 255, 355, 455 is attached to the base end side of the arm 161, 261, 361, 461, and the illumination 156, 256, 356, 456 is attached to the distal end side of the arm 161, 261, 361, 461, but conversely, the camera 155, 255, 355, 455 may be attached to the distal end side of the arm 161, 261, 361, 461, and the illumination 156, 256, 356, 456 may be attached to the base end side of the arm 161, 261, 361, 461. Furthermore, in the first and second embodiments, the camera 155, 255, 355, 455 and the illumination 156, 256, 356, 456 are attached to the arm 161, 261, 361, 461, but the camera 155, 255, 355, 455 or the illumination 156, 256, 356, 456, or both, may be attached to another place in the analysis unit 110, 210, 310. Moreover, in the above embodiments, a configuration provided with only one camera 155, 255, 355, 455 was adopted, but a configuration may be adopted in which two or more cameras are provided, and the distal end of the tip 153, 253, 353, 453 and the sample injection port 144, 244, 344 are photographed by separate cameras.

Furthermore, in the first and second embodiments, the photoelectric sensor 170, 270, 370 are of the transmission type, and light emitted from the light emitting unit 171, 271, 371 and partially blocked by the tip 153, 253, 353, 453 is detected by the light receiving unit 172, 272, 372. However, the present invention is not limited to this, a reflection type may be used as the photoelectric sensor 170, 270, 370, and light emitted from a light emitting unit of the photoelectric sensor and reflected by the tip 153, 253, 353, 453 may be detected by a light receiving unit of the photoelectric sensor. Alternatively, a retroreflection type provided with a light emitting unit, a reflection unit, and a light receiving unit may be used as the photoelectric sensor 170, 270, 370, and light emitted from the light emitting unit of the photoelectric sensor, reflected by the reflection unit, and then partially blocked by the tip 153, 253, 353, 453 may be detected by the light receiving unit.

Further, in the first and second embodiments, the present invention is applied to an autosampler of an atomic absorption spectrophotometer, but the invention is not limited thereto, and the present invention can also be applied to an autosampler for another analytical device (for example, a liquid chromatograph or a gas chromatograph). In addition, the liquid sampling and injecting apparatus according to the present invention can also be an apparatus that samples a liquid other than a sample and supplies it to a predetermined place (for example, an apparatus that samples a culture medium containing cells and discharges it into a predetermined container, or the like).

### [Examples]

An experiment conducted to confirm the effects of the present invention will be described with reference to Figs. 11 to 13.

Fig. 11 is a graph showing the height of the arm 361 when the distal end of the tip 353 is detected by the photoelectric sensor 370 (hereinafter referred to as "detection-time arm height") when the arm 361 is lowered from a predetermined height above the photoelectric sensor 370 in the atomic absorption spectrophotometer according to the second embodiment. The vertical axis of the graph shows the distance from the lens distal end of the camera 355 to the distal end of the tip 353 (that is, the above-mentioned working distance), and the horizontal axis represents the detection-time arm height as a position in the z-axis direction (vertical direction) when the predetermined height is taken as 0. As can be seen from the figure, the detection-time arm height linearly changes according to the working distance, and the reproducibility was confirmed to be as high as R²=0.9979.

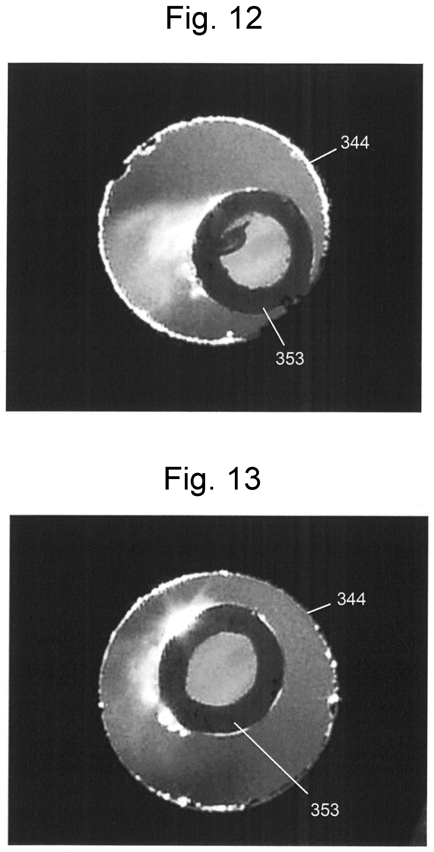

Figs. 12 and 13 are images showing results of alignment of the distal end of the tip 353 with the sample injection port 344 in the atomic absorption spectrophotometer according to the second embodiment. However, these images were captured using a plate provided with an opening ("injection hole" in the figures) having dimensions equivalent to those of the sample injection port 344 in place of the sample heating unit 341. Fig. 12 shows a result of alignment of the distal end of the tip 353 with the sample injection port 344 only from an image captured by the camera 355, and Fig. 13 shows a result of alignment of the distal end of the tip 353 with the sample injection port 344 based on an image captured by the camera 355 and the working distance specified by the method of the second embodiment. As is apparent from these figures, it was confirmed that more accurate alignment can be performed by using the working distance in addition to the image.

### [Aspects]

It will be clear to those skilled in the art that the exemplary embodiments described above are specific examples of the following aspects.

(Aspect 1) A liquid sampling and injecting apparatus according to one aspect of the present invention comprises:
a liquid sampling and injecting apparatus for sampling a liquid and injecting the liquid into a predetermined place, comprising:
a tubular tip that aspirates and discharges a liquid with a distal end facing downward;
a moving mechanism that moves the tip in a three-dimensional space;
an imaging unit that captures an image of the distal end of the tip;
a photoelectric sensor having a light emitting unit and a light receiving unit; and
a position specifying unit that specifies a position of the distal end of the tip in the three-dimensional space based on the image of the distal end of the tip captured by the imaging unit and detection information obtained by detecting the distal end of the tip with the photoelectric sensor,
and has the above configuration.

(Aspect 2) The liquid sampling and injecting apparatus according to Aspect 2 is the liquid sampling and injecting apparatus according to Aspect 1, wherein:
the photoelectric sensor has a plurality of regions arranged in a predetermined direction on a light receiving surface of the light receiving unit, and outputs a detection signal according to a difference or ratio in a light receiving amount in each of the plurality of regions; and
the position specifying unit uses the detection signal of the photoelectric sensor when the distal end of the tip is located on a path of light emitted from the light emitting unit as the detection information.

(Aspect 3) The liquid sampling and injecting apparatus according to Aspect 3 is the liquid sampling and injecting apparatus according to Aspect 1, wherein:
the position specifying unit uses information on a lowering amount when the tip is lowered from above the photoelectric sensor to a position where the distal end of the tip is detected by the photoelectric sensor as the detection information.

(Aspect 4) The liquid sampling and injecting apparatus according to Aspect 4 is the liquid sampling and injecting apparatus according to any one of Aspects 1 to 3, wherein:
the liquid sampling and injecting apparatus is an autosampler for sampling a liquid sample from a sample container and injecting the liquid sample into a sample injection port provided in a sample heating unit of an electrical heating type atomic absorption spectrophotometer.

According to the liquid sampling and injecting apparatus pertaining to Aspects 1 to 4, the distal end position of the tip can be specified with high precision by using detection information obtained by detecting the distal end of the tip with a photoelectric sensor in addition to an image captured by an imaging unit. Further, since the photoelectric sensor is relatively inexpensive, according to the liquid sampling and injecting apparatus pertaining to Aspects 1 to 4, precise specification of the tip distal end position can be realized without a significant increase in manufacturing cost.

### [Reference Signs List]

- 110 ...: Analysis unit
- 120 ...: Control/processing unit
- 121 ...: Position information acquisition control unit
- 122 ...: Image analysis unit
- 123 ...: Position specifying unit
- 124 ...: Teaching information generation unit
- 127 ...: Storage unit
- 140 ...: Measurement unit
- 141 ...: Sample heating unit
- 144 ...: Sample injection port
- 150 ...: Autosampler
- 151 ...: Sample container
- 152 ...: Turntable
- 153 ...: Tip
- 155 ...: Camera
- 160 ...: Tip moving mechanism
- 161 ...: Arm
- 162 ...: Shaft member
- 163 ...: Arm drive unit
- 170 ...: Photoelectric sensor
- 171 ...: Light emitting unit
- 172 ...: Light receiving unit
- 175 ...: First region
- 176 ...: Second region
- 181 ...: Stage
- 182 ...: Stage drive unit

## Claims

1. A liquid sampling and injecting apparatus for sampling a liquid and injecting the liquid into a predetermined place, comprising:
a tubular tip that aspirates and discharges a liquid with a distal end facing downward,
a moving mechanism that moves the tip in a three-dimensional space,
an imaging unit that captures an image of the distal end of the tip,
a photoelectric sensor having a light emitting unit and a light receiving unit, and
a position specifying unit that specifies a position of the distal end of the tip in the three-dimensional space based on the image of the distal end of the tip captured by the imaging unit and detection information obtained by detecting the distal end of the tip with the photoelectric sensor.

2. The liquid sampling and injecting apparatus according to claim 1, wherein
the photoelectric sensor has a plurality of regions arranged in a predetermined direction on a light receiving surface of the light receiving unit, and outputs a detection signal according to a difference or ratio in a light receiving amount in each of the plurality of regions; and
the position specifying unit uses the detection signal of the photoelectric sensor when the distal end of the tip is located on a path of light emitted from the light emitting unit as the detection information.

3. The liquid sampling and injecting apparatus according to claim 1, wherein
the position specifying unit uses information on a lowering amount when the tip is lowered from above the photoelectric sensor to a position where the distal end of the tip is detected by the photoelectric sensor as the detection information.

4. The liquid sampling and injecting apparatus according to any one of claims 1-3, wherein
the liquid sampling and injecting apparatus is
an autosampler for sampling a liquid sample from a sample container and injecting the liquid sample into a sample injection port provided in a heating furnace of an electrical heating type atomic absorption spectrophotometer.
